**Europäisches Patentamt**

**European Patent Office**

**Office européen des brevets**

(19)

(11) Veröffentlichungsnummer : **0 390 897 B1**

(12) **EUROPÄISCHE PATENTSCHRIFT**

(45) Veröffentlichungstag der Patentschrift :
**13.05.92 Patentblatt 92/20**

(51) Int. Cl.⁵ : **F16H 25/24, B25B 5/10**

(21) Anmeldenummer : **89911019.1**

(22) Anmeldetag : **07.10.89**

(86) Internationale Anmeldenummer :
**PCT/DE89/00641**

(87) Internationale Veröffentlichungsnummer :
**WO 90/04120 19.04.90 Gazette 90/09**

(54) **Schnelltrennbare Schraubvorrichtung.**

(30) Priorität : **10.10.88 DE 3834418**

(43) Veröffentlichungstag der Anmeldung :
**10.10.90 Patentblatt 90/41**

(45) Bekanntmachung des Hinweises auf die
Patenterteilung :
**13.05.92 Patentblatt 92/20**

(84) Benannte Vertragsstaaten :
**CH DE FR GB LI SE**

(56) Entgegenhaltungen :
**EP-A- 0 025 750**

(56) Entgegenhaltungen :
**CH-A- 658 620**
**DE-A- 3 026 158**
**US-A- 2 648 991**
**US-A- 3 570 836**

(73) Patentinhaber : **Leica Industrieverwaltung
GmbH
Ernst-Leitz-Strasse 30 Postfach 20 20
W-6330 Wetzlar 1 (DE)**

(72) Erfinder : **GROSSMANN, Klaus-Dieter
Wetzlarerstr. 32
W-6337 Leun (DE)**
Erfinder : **TEWS, Bruno
Helgebachstr. 3
W-6330 Wetzlar (DE)**

EP 0 390 897 B1

Anmerkung : Innerhalb von neun Monaten nach der Bekanntmachung des Hinweises auf die Erteilung des europäischen Patents kann jedermann beim Europäischen Patentamt gegen das erteilte europä- ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent- übereinkommen).

Jouve, 18, rue Saint-Denis, 75001 PARIS

EP 0 390 897 B1

## Beschreibung

Die Erfindung betrifft eine schnelltrennbare Schraubvorrichtung.

Derartige Schraubvorrichtungen sind allgemein auch als Schraubengetriebe bekannt und ermöglichen eine gleichförmige Bewegungsumwandlung zwischen Drehung und Längsbewegung. Regelmäßig wird dabei das Schraubgelenk aus Schraube und Mutter mit Außen- und Innengewinde gebildet. Verschub-Weg und -Geschwindigkeit der Mutter relativ zur Schraube sind durch die Schraubenlänge und die Steigung des Gewindes sowie die Drehgeschwindigkeit zwischen Schraube und Mutter in weiten Grenzen wählbar. Anwendungen finden Schraubengetriebe z.B. als Einstellgetriebe in optischen Geräten, als Spindelverschub für Werkzeuge oder Werkstücke bei Werkzeugmaschinen, als Justiereinrichtung oder Spanneinrichtung. Dabei besteht vielfach ein Bedürfnis, große Verschubwege schnell zurückzulegen, aber dann in einem engen Bereich sehr fein einzustellen, oder dann große Kräfte in Verschieberichtung aufzubringen. Da bei einem Schraubengetriebe aber nur die Drehgeschwindigkeit im Betrieb veränderlich ist, sind dabei Kompromisse notwendig. Anders ist das, wenn eine Möglichkeit besteht, den Eingriff der beiden Gewinde aufzuheben.

Aus S. Hildebrand, Feinmechanische Bauelemente, Berlin 1968, S. 258 f., ist eine Aufsteckmutter bekannt, die außer der Gewindebohrung noch eine eine schräg dazu liegende Durchgangsbohrung aufweist. In Schräglage kann die Aufsteckmutter frei auf einer Schraube verschoben werden, nach Kippen in axiale Richtung greift das Muttergewinde in das Schraubgewinde ein und ein gewöhnliches Schrauben ist mit unbegrenztem Hub möglich. Nachteil ist, zumindest für Abwandlungen z.B. als Spannmittel, die nötige zusätzliche Kippbewegung.

Aus Richter, v. Voss, Bauelemente der Feinmechanik, 2. Auflage, Berlin 1938, S. 160 f., sind Einrenkungen mit Sicherung durch Verschraubung bekannt. Dabei weisen zwei zu verbindende Teile Außenund Innengewinde auf, das bei beiden Teilen an drei Stellen des Umfangs weggefräst ist, so daß die Teile zusammengesteckt und durch eine Drehung von etwa 60° verbunden werden können. Nach diesem Prinzip sind auch Schnellspannschrauben bekannt. Dabei muß notwendigerweise auch das Teil mit Außengewinde (Schraube) besonders bearbeitet werden. Für die Schraubbewegung steht nur ein Drehwinkel von 60° zur Verfügung, so daß der Längshub auf nur 1/6 der Steigung des Gewindes beschränkt ist. Beide Teile müssen zum Zusammensetzen in definierter Winkellage zueinander stehen.

Aus der DE-A-23 11 485 ist eine Einrichtung zur Vermessung von Rachenlehren bekannt, bei der die Meßobjekte in einem speziellen Spannbock durch einen einfachen Schraubenbolzen festgespannt werden. Bei einem Wechsel der Meßobjekte muß entweder der ganze Spannbock ausgetauscht werden, oder wenn nur die Spannweite anders ist, der Schraubenbolzen langwierig bis zu der passenden Spannweite gedreht werden. Großer Aufwand für die Vorhaltung der Spannböcke und hohe Rüstzeiten sind die Folge.

Aus der US-A-3 570 836 ist eine Klemmvorrichtung bekannt, die aus zwei Gewindestangen und je einer mit diesen Gewindestangen in Eingriff bringbaren, schnelltrennbaren Schraubvorrichtung besteht. Die eine Gewindestange ist in dem Aufspanntisch befestigt. Eine Klemmbacke enthält eine zylindrische Bohrung und wird in axialer Richtung von dieser Gewindestange geführt. Der Gewindestange ist eine Schraubvorrichtung zugeordnet, die aus einem Gehäuse besteht, das ebenfalls in axialer Richtung auf der Gewindestange verschiebbar ist. In dem Gehäuse ist ein Schraubteil vorhanden, das zentral eine Bohrung mit einem Gewinde enthält, das zu dem der Gewindestange paßt. Parallel zu dieser Gewindebohrung ist eine zylindrische Bohrung mit einem größeren Durchmesser derart angebracht, daß sie mindestens die Hälfte der Gewindebohrung überdeckt. Der verbleibende Teil der Gewindebohrung wird über eine Feder gegen die Innenwand des Gehäuses abgestützt und steht dadurch mit der Gewindestange im Eingriff. Durch radialen Druck gegen die Federkraft werden das Schraubteil und die Gewindestange entkoppelt, so daß das Gehäuse mit dem Schraubteil auf der Gewindestange in axialer Richtung verschoben werden können, bis sie auf der Klemmbacke aufliegen. Unter dem Druck der Feder kommt danach das Schraubteil mit der Gewindestange in Eingriff und kann über einen begrenzten Winkel innerhalb des Gehäuses gedreht werden, um einen festen Kontakt zwischen Schraubteil und Bodenfläche des Gehäuses herzustellen. Die Klemmung der Klemmbacke gegen das aufzuspannende Werkstück erfolgt durch weiteres Drehen des Schraubteiles, wobei das Gehäuse mitgedreht wird. Dabei entstehen hohe Reibkräfte gegenüber der Klemmbacke, so daß die Gefahr besteht, daß das Werkstück auf dem Aufspanntisch verschoben wird. Aus diesem Grunde ist an der Klemmbacke ebenfalls ein Gehäuse mit Schraubteil angeordnet, wobei jedoch in kinematischer Umkehr die Gewindestange gegenüber dem Gehäuse verschiebbar und nach Eingriff des Schraubteiles drehverstellbar ist. Diese Gewindestange stützt sich in der Klemmposition auf dem Aufspanntisch ab und übt aufgrund der Führung der Klemmbacke durch die erste Gewindestange auf das Werkstück eine reine Klemmkraft aus.

Aus der CH-B-658 620 ist eine Schnellspannvorrichtung bekannt, die eine in einem Gehäuse geradlinig verschiebbare Spannklaue enthält. Das Gehäuse wird auf dem Aufspanntisch befestigt. Die Spannklaue ist auf einer Seite mit einem Gewindesegment versehen, in welches eine Gewindespindel zum Spannen der Spannklaue eingreift. Die Gewindespindel ist in dem Gehäuse derart verschwenkbar gelagert, daß sie aus dem Gewindesegment ausgerastet werden kann. Dadurch ist die Spannklaue frei verstellbar und kann ohne Drehen der Spindel in jede beliebige Position gefahren werden. Der maximale Hub der Spannklaue ist durch die Gehäusehöhe und die dadurch vorgegebene Länge der Gewindspindel begrenzt.

Es ist die Aufgabe der Erfindung, eine schnelltrennbare Schraubvorrichtung anzugeben, bei der nur durch eine Drehbewegung eine Schnellausrückung möglich ist, und die in eingerücktem Zustand unbegrenzten Hub erlaubt. Die Ausbildung einer solchen Schraubvorrichtung als Schnellspannpratze soll sich besonders als universelles und schnelles Spannmittel zur Befestigung von Meßobjekten für moderne automatische 3D-Meßmaschinen eignen.

Diese Aufgabe wird bei einer gattungsgemäßen Schraubvorrichtung durch die Merkmale des Anspruchs 1 gelöst. Vorteilhafte Weiterbildungen sind Gegenstand der Unteransprüche 2 bis 6.

Die Erfindung geht aus von der Erkenntnis, daß ein Schraubgelenk auch ohne die regelmäßig angewendete Umhüllung der Schraube durch die Mutter realisiert werden kann. Vielmehr genügt es, daß beide Gewinde nur in einem Sektor ineinander eingreifen. Dann können beide Gewinde Außengewinde sein. Zu beachten ist dabei nur die geringe Belastbarkeit des Schraubgelenks.

Besonders vorteilhafte Anwendung finden erfindungsgemäße Schraubvorrichtungen als Schnellspannpratze, insbesondere zur Befestigung von Meßobjekten für moderne automatische 3D-Meßmaschinen. Solche 3D-Meßmaschinen führen mit hoher Geschwindigkeit vollautomatische Dimensionsmessungen aus und werden zur optimalen Maschinenauslastung durch automatische Handhabungssysteme mit auf Paletten befestigten Meßobjekten beschickt. Dabei gibt es besondere Anforderungen an die Spannmittel zur Befestigung der Meßobjekte auf den Paletten. Für eine dichte Belegung der Paletten und zur Vermeidung von Kollisionen mit dem Meßkopf bzw. von von diesem zu fahrenden Umwegen soll das Spannmittel kompakt sein. Ein geringes Gewicht wird angestrebt, um die von den Handhabungsgeräten zu bewegenden. Lasten zu begrenzen. Wichtig ist eine flexible Spanngeometrie, da im Gegensatz zu Fertigungsmaschinen praktisch nie Serien gleicher Teile zu spannen sind, sondern wechselnde Einzelstücke, z.B. Lehren, mit unterschiedlichen Abmessungen.

Hauptforderung ist eine kurze Rüstzeit für das Belegen der Paletten, die mit der Meßzeit in Relation steht, so daß der Personalaufwand und der Aufwand für bereitzuhaltende Paletten usw. beschränkt bleibt. Dazu sollen die Spannmittel möglichst universell verwendbar sein, um durch kleine Zahl verschiedener Elemente den Zugriff schnell und sicher zu machen, sie sollen dazu schnell verstellbar sein und sie sollen schnell festzuspannen sein. Eine einfache und kostengünstige Herstellung ist wegen der großen Zahl der vorzuhaltenden Spannmittel gefordert.

Alle diese Forderungen können als Schnellspannpratzen ausgeführte erfindungsgemäße Schraubvorrichtungen nach den im folgenden anhand der Figuren dargestellen Beispielen hervorragend erfüllen.

Es zeigen im einzelnen:

Fig. 1a: Den seitlichen Schnitt einer ersten Ausführung einer erfindungsgemäßen Schraubvorrichtung als Schnellspannpratze mit besonders einfachem Spannstück;

Fig. 1b: Aufsicht auf die erste Ausführungsform;

Fig. 2a: Im Schnitt seitlich ein verbessertes Spannstück;

Fig. 2b: Aufsicht auf das Sapannstück;

Fig. 3: eine Variante mit einer Dreiecksäule als Träger des ersten Gewindeteils, das zudem als Sektor eines Innengewindes ausgeführt ist;

Fig. 4: eine erfindungsgemäße Schraubvorrichtung ausgeführt als Spindeltrieb für eine lineare Verschubeinrichtung.

Figur 1a zeigt ein Beispiel für die Ausbildung einer erfindungsgemäßen Schraubvorrichtung als Schnellspannpratze für die Werkstückbefestigung auf einem Maschinentisch.

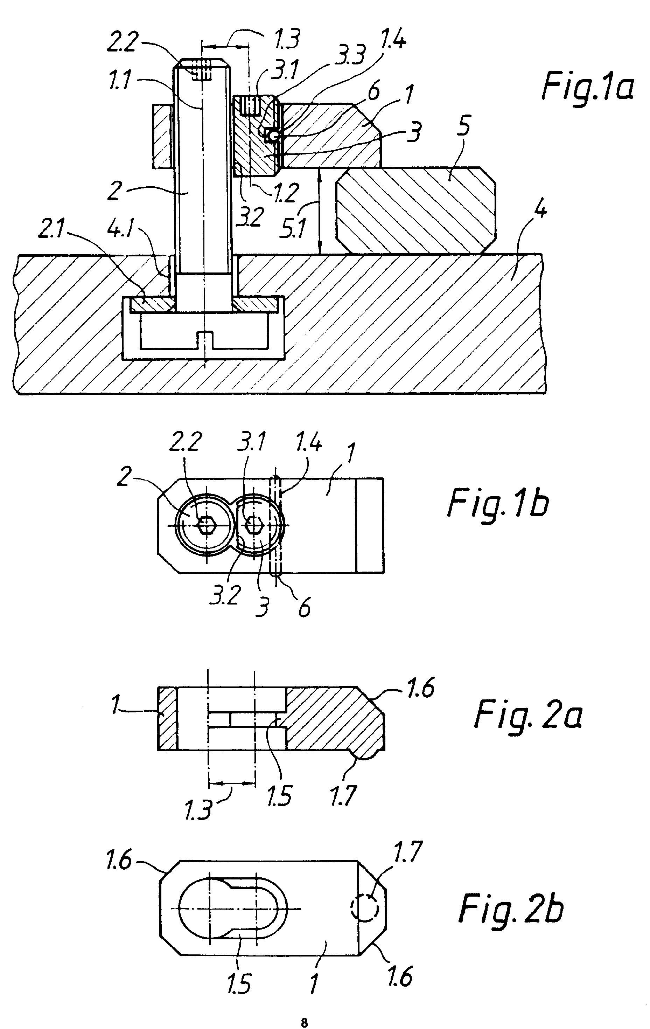

Eine Spannbacke 1 ist als Schraubteil ausgeführt, eine Schraube 2 ist als erstes und ein Gewindestift 3 als zweites Gewindeteil vorgesehen. Die Schraube 2 ist an einem Maschinentisch 4 befestigt, auf dem ein Werkstück 5 aufliegt, welches durch die Spannbacke 1 gehalten wird. Die Schraube 2 kann eine Normschraube nach DIN 84 mit Gewinde nach DIN 13 sein, die mit ihrem Kopf, gegebenenfalls mit einer Beilage 2.1, in eine T-Nut 4.1 des Maschinentisches eingreift. Zweckmäßig ist ein Werkzeugeingriff, z.B. ein Innensechskant 2.2 am oberen Schraubenende. Der Gewindestift 3 ist - vgl. Figur 1b - einseitig bis auf den Kerndurchmesser abgeflacht, so daß eine Ausnehmung 3.2 entsteht, und es ist eine Ringnut 3.3 eingedreht. Der Gewindestift 3 hat gleiches Gewinde wie die Schraube 2 und kann aus einem kurzen Norm-Gewindestift mit Innensechskant 3.1 nach DIN 913 hergestellt werden.

Die Spannbacke 1 ist in ihrer einfachsten Form ein Metallquader, der zwei parallele Durchgangslöcher 1.1, 1.2 für die Schraube 2 und den Gewindestift 3 aufweist, die im Abstand 1.3 der Summe der Flankenradien der Gewinde von Schraube 2 und Gewindestift 3 angebracht sind, wodurch zwischen ihnen kein Steg stehen bleibt. Das erste Durchgangsloch 1.1 ist die Geradführung für die Schraube 2, das zweite Durchgangsloch 1.2 ist das Radiallager für den Gewindestift 3. Zur Bildung des erforderlichen Axiallagers ist in die Spannbacke 1 quer zu dem zweiten Durchgangsloch 1.2 eine Bohrung 1.4 angebracht, in die ein Stift 6 eingesteckt wird, der in die Ringnut 3.3 des Gewindestifts 3 eingreift.

Ist der Gewindestift 3 in die zweite Durchgangsbohrung 1.2 der Spannbacke 1 eingesetzt und durch den Stift 6 axial festgelegt, dann wird er so gedreht, daß die Ausnehmung 3.2 zum ersten Durchgangsloch 1.1 zeigt. Die Spannbacke 1 kann jetzt mit dem ersten Durchgangsloch 1.1 auf die Schraube 2 aufgesetzt werden, über die ganze Länge der Schraube 2 verschoben werden und gegen diese frei verdreht werden. Die Spannbacke 1 kann also in beliebiger Winkellage zur Schraube 2 und mit beliebiger Spannweite 5.1 zur Anlage an das Werkstück 5 gebracht werden. Wird nun ein Drehwerkzeug in den Innensechskant 3.1 eingesetzt und der Gewindestift 3 um einen kleinen Winkel verdreht, dann gelangt das außerhalb der Ausnehmung 3.2 vorhandene Gewinde in Eingriff mit dem Gewinde der Schraube 2. Damit wird zunächst die Funktion eines Riegelgesperres erzielt, d.h. der Gewindestift 3 als Sperrer greift formschlüssig in die Schraube 2 als Sperrglied und sperrt so die Längsverschiebung zwischen der Schraube 2, dem Gewindestift 3 und der Spannbacke 1.

Bei weiterem Verdrehen des Gewindestifts 3 wird dann die Anordnung als Schraubengetriebe wirksam, denn durch den gegenseitigen Eingriff der Gewinde ist zwischen Gewindestift 3 und Schraube 2 ein Schraubgelenk gebildet. Eine Drehung des Gewindestifts 3 in der Spannbacke 1 bewirkt dann eine Verschiebung der Spannbacke 1 gegenüber der Schraube 2 und damit gegenüber dem Maschinentisch 4 und dem Werkstück 5. Das Werkstück 5 kann also festgespannt werden.

Der Eingriff des Riegelgesperres ist über den gesamten Verstellbereich der Spannweite 5.1 möglich, jedoch nur in Rastabständen von einer Ganghöhe der beiden Gewinde der Schraube 2 und des Gewindestifts 3. Durch die Keilform aller Flächen der Gewinde und den flachen Übergang von der Ausnehmung 3.2 auf das Gewinde des Gewindestifts 3 ist die Verriegelung beim Verdrehen des Gewindestifts 3 leichtgängig. Trapezgewinde, die sonst für Bewegungsschrauben vorgezogen werden eignen sich demgegenüber weniger, da dabei Verklemmungen zwischen den äußeren Umfangsflächen sehr wahrscheinlich sind.

Auch eine bogenförmige Ausführung der Ausnehmung 3.2 des Gewindestifts 3, bei der ein größerer Gewindesektor verbleibt, führt eher zu Verklemmungen bei der Verriegelung.

Nach der Verriegelung ist der durch das Schraubengetriebe ausführbare Hub gegeben durch die Steigung des Gewindes des Gewindestifts 3 multipliziert mit der Zahl der Umdrehungen des Gewindestifts 3. Da bei jeder Umdrehung des Gewindestifts 3 einmal die entriegelte Stellung, bei der die Ausnehmung 3.2 der Schraube 2 gegenüberliegt, erreicht wird, ist nur etwa eine 3/4 Umdrehung für das Schraubengetriebe nutzbar. Der durch Verdrehen des Gewindestifts 3 erzielbare Hub für die Spannbewegung zwischen Spannbacke 1 und Schraube 2 beträgt also nur etwa 3/4 der Steigung des Gewindestifts 3. Bei eingängigen Gewinden ist die Steigung gleich der Ganghöhe. Daher ist der größte Hub der Spannbewegung dann zunächst kleiner als der Rastabstand der Verriegelung. Ist, wie beschrieben, die Schraube 2 drehbar am Maschinentisch 4 befestigt, dann kann durch deren Verdrehen am Innensechskant 2.2 eine Spannbewegung mit beliebigem Hub, wie bei einer gewöhnlichen Schraube/Mutter-Paarung, zu der Spannbewegung durch das Verdrehen des Gewindestifts 3 addiert werden. So wird auch die Lage der Raststellungen des Riegelgesperres beliebig einstellbar. Allerdings ist dann die Bedienung zweier Stellelemente für eine Spannung vielfach notwendig.

Werden die Schraube 2 und der Gewindestift 3 mit mehrgängigen Gewinden versehen, dann läßt sich die Spannung immer nur durch Verdrehen des Gewindestifts 3 erzielen. Bei einem zweigängigen Gewinde ist die Steigung doppelt so groß wie die Ganghöhe, so daß der Hub bei 3/4 Umdrehungen das 1 1/2fache der Ganghöhe und somit des Rastabstandes ist.

Figuren 2a und 2b zeigen eine verbesserte Form des Spannstücks 1, die sich besonders bei der Fertigung als Leichtmetall-Gußstück eignet. Die beiden Durchgangslöcher 1.1 und 1.2 der Ausführung nach Figur 1a sind zu einem Langloch vereinigt, in welches ein Steg 1.5 hineinragt. Der Steg 1.5 läßt den Bereich des ersten Durchgangsloches 1.1 für die Schraube 2 ganz frei und ist so ausgebildet, daß er in die Nut 3.3 des Gewindestifts 3 eingreift und so dessen Axiallager bildet. Zur Montage wird der Gewindestift 3 im Bereich des ersten Durchgangslochs 1.1 eingesteckt und mit seiner Nut 3.3 in den Steg 1.5 eingeführt und seitlich in seine Grundstellung eingeschoben. Damit ist eine einfachere Montage möglich, da das Einsetzen des Stifts 6 entfällt, außerdem hat das Axiallager in der Nut 3.3 eine bedeutend höhere Lagerfläche und damit eine höhere Belastbarkeit. Besonders bei der Ausführung als Gußteil kann auch vorteilhaft Material und Gewicht gespart werden durch Abflachungen 1.6 u.ä. in unbelasteten Bereichen der Quadergrundform der Spannbacke 1 entsprechend Figur 1a.

Auch ist es leicht möglich, ein besonderes Druckstück 1.7 für den Kontakt mit dem zu spannenden Werkstück vorzusehen, z.B. eine Schneide oder eine Kugelkalotte. Aufwendiger ist der Einsatz eines gesonderten Bauteils als Druckstück 1.7. Vorteilhaft ist dabei die Ausführung aus hartem bzw. gehärtetem Material oder die Ausführung mit einer in einem Kugelgelenk geführten Andruckplatte, welche beste Flächenpressung des Werkstücks 5 ermöglicht.

Gegenüber einer gewöhnlichen Paarung von Schraube und Mutter ist das hier vorgestellte Schraubgelenk weniger belastbar, da an Stelle der Flächenbelastung auf einem Kreisring die Belastung eines kleinen Sektors, im Grenzfall nur der Berührungslinie, tritt. Erhöht wird die Belastbarkeit der Schnellspannpratze nach Fig. 1a und 2a dadurch, daß unter Last die Spannbacke 1 gegen die Schraube 2 kippt, so daß bei geeigneter Passung des Durchgangslochs 1.1 eine Klemmung durch Verkanten entsteht, die eine zusätzliche Belastung übernehmen kann.

Vorteilhaft ist die zwangsläufige Beschränkung der Spannkraft der vorgestellten Spannpratze. Bei gegebenem Abstand zwischen Schraube 2 und Druckstück 1.7, gegebener Steifigkeit der Spannbacke 1 und der Schraube 2 und gegebener Steigung des Gewindes des Gewindestifts 3 ist über den durch den begrenzten Drehwinkel des Gewindestifts 3 beim Eingriff mit der Schraube 2 begrenzten Hub des Schraubengetriebes die Spannkraft zwischen dem Druckstück 1.7 an der Spannbacke 1 und dem Maschinentisch 4 begrenzt. Damit kann auf die Verwendung von Drehmomentschlüsseln o. dgl. zur Bedienung der Spannpratze verzichtet werden. Zur Einstellung der Grenzkraft kann bei sonst festbleibenden Konstruktionsdaten die Ausnehmung 3.2 des Gewindes am Gewindestift 3 verändert werden, wodurch der mögliche Drehwinkel im Eingriff der Gewinde begrenzt wird und damit auch der Hub des Schraubengetriebes.

Die Schraube 2 kann in allen üblichen Arten am Maschinentisch 4 befestigt sein. Wird sie direkt in ein Gewinde des Maschinentisches 4 eingeschraubt, dann ist es allerdings nicht mehr möglich, die Spannpratze durch Drehen der Schraube 2 zusätzlich zur Bedienung durch den Gewindestift 3 zu verstellen.

Da nur ein schmaler Sektor des Gewindes der Schraube 2 in Eingriff mit dem Gewindestift 3 steht, kann die Schraube 2 auch ohne weiteres durch eine prismatische Säule mit einem Gewindesektor ersetzt werden, z.B. um Gewicht zu sparen.

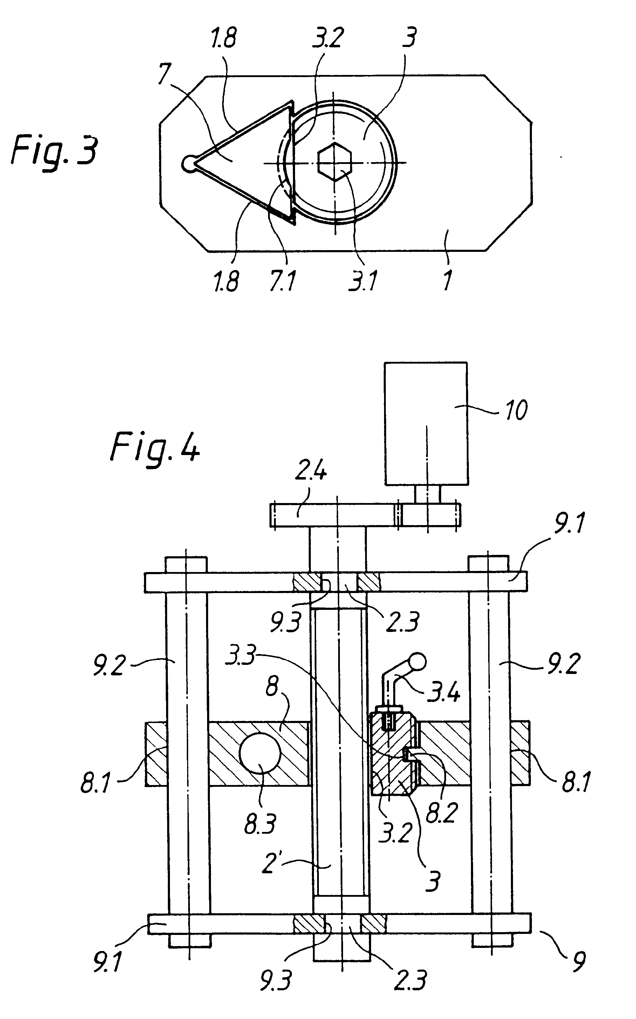

Figur 3 zeigt die Ausführung einer Schnellspannpratze mit einer Dreiecksäule 7 anstelle einer Schraube 2 mit entsprechenden Führungen 1.8 in der Spannbacke 1. Der Gewindesektor 7.1 ist als Sektor eines Innengewindes dargestellt. Das hat zur Folge, daß der Gewindesektor 7.1 und der Gewindestift 3 auf der ganzen Breite des Gewindesektors 7.1 in Eingriff stehen können, so daß diese Ausführung des Schraubengetriebes die Schnellspannpratze besonders belastbar macht.

Die beschriebenen Ausführungen sind also in besonderer Weise geeignet, die Anforderungen an Spannmittel zur Befestigung von Meßobjekten für moderne automatische 3D-Meßmaschinen zu erfüllen. Da keine raumgreifenden Hebel vorhanden sind, sind die Spannpratzen kompakt und besonders mit einer Leichtmetall-Spannbacke 1 auch leicht. Die Spannweite ist besonders leicht verstellbar. Durch Vorhalten verschieden langer Schrauben 2, die billige Normteile sein können, kann der vertikale Raumbedarf der Spannpratzen der benötigten Spannweite bedarfsgerecht angepaßt werden. Für verschiedene Spannkräfte oder Auslegerweiten können wenige verschiedene Abmessungen der Spannpratzen vorgesehen werden. Es ist möglich, die Verstellung der Spannweite, das Verriegeln und das Spannen nur durch Bedienen des Gewindestifts 3 - schieben und drehen - mit einem Werkzeug mit einer Hand auszuführen. Die Winkellage der Spannbacke 1 zur Schraube 2 ist beliebig und braucht nicht eingestellt zu werden. Daher sind sehr kurze Rüstzeiten zum Spannen unterschiedlicher Meßobjekte realisierbar. Die Spannpratze besteht aus nur drei Einzelteilen, wobei die Schraube 2 ohne weiteres ein Normteil sein kann und auch der Gewindestift 3 und die Spannbacke 1 einfache Werkstücke sind.

Ein Beispiel für eine erfindungsgemäße Schraubvorrichtung in einem ganz anderen Anwendungsbereich zeigt Figur 4, die einen Spindeltrieb für eine lineare Verschubeinrichtung darstellt, wie er z.B. in Werkzeugmaschinen für die Werkzeug- oder Werkstückverstellung geeignet ist oder in optischen Geräten zur Justierung optischer Elemente verwendet werden kann. Dabei bestehen vielfach gleichzeitig die Forderungen nach schneller Verstellung über einen langen Weg und nach präziser Positionierung in einem kleinen Bereich. Auch ist vielfach aus Sicherheitsgründen ein schnelles Abstellen der Verschubbewegung erforderlich. Diesen Anforderungen wird ein Spindeltrieb in der erfindungsgemäßen Ausführung mit Schnellausrückung in besonderer Weise gerecht. Figur 4 zeigt eine Schraubspindel 2', die einen Gleitkörper 8 in einem Führungsgestell 9 antreibt. Das Führungsgestell 9 kann in beliebiger Form ausgebildet werden, z.B. wie gezeigt als ein Rahmen mit Endstücken 9.1 und zwei darin parallel befestigten Rundstäben 9.2 als Führungsbahnen, von denen der Gleitkörper 8 geführt wird. Mittig zwischen den Rundstäben 9.2 tragen die Endstücke 9.1 Radial- und Axiallager 9.3 für die Lagerstellen 2.3 der Schraubspindel 2', die an einem Ende ein Zahnrad 2.4 trägt und durch einen Motor 10 mit Ritzel angetrieben wird. Bei bekannten Anordnungen trägt dann der Gleitkörper 8 ein Muttergewinde, das das Gewinde der Schraub-spindel 2' umfaßt. Erfindungsgemäß weist jedoch der Gleitkörper 8 wie die Spannbacke 1 in Figur 1a eine Durchgangsbohrung für die Schraubspindel 2' auf und parallel dazu eine Bohrung für den auch in Fig. 1a,1b gezeigten Gewindestift 3 mit der Ausnehmung 3.2 des Gewindes an einer Seite und einer Nut 3.3 zur Axiallagerung. Abweichend ist seine Ausstattung mit einem Stellhebel 3.4 dargestellt, der sein Verdrehen ohne Werkzeug gestattet. In die Nut 3.3 des Gewindestifts 3 greift ein Stift oder ein Steg 8.2 des Gleitkörpers 8 ein. Schematisch ist eine am Gleitstück 8 ausgebildete Werkzeugaufnahme 8.3 dargestellt.

Ist die Ausnehmung 3.2 des Gewindestifts 3 der Schraubspindel 2′ zugewandt, dann ist der Gleitkörper 8 gegenüber der Schraubspindel 2′ frei verschiebbar und kann z.B. manuell schnell verschoben werden, um z.B. ein auf dem Gleitkörper 8 befestigtes Werkzeug aus einer Warteposition an ein Werkstück heranzufahren. Dann wird der Gewindestift 3 gedreht, so daß beide Gewinde in Eingriff kommen, wie schon zu Fig. 1a bis 3 beschrieben. Jetzt kann der Gleitkörper in bekannter Weise durch Drehen der Schraubspindel 2′ mittels des Motors 10 auf dem Führungsgestell 9 längs verschoben werden. Z.B. im Gefahrenfall wird auch bei laufendem Motor 10 der Hebel 3.4 umgelegt, so daß die Ausnehmung 3.2 des Gewindestifts 3 der Schraubspindel 2′ zugewandt ist, wodurch der Antrieb des Gleitkörpers 8 sofort unterbrochen wird.

Die dargestellten Ausführungsbeispiele für erfindungsgemäße schnelltrennbare Schraubvorrichtungen sind nicht abschließend. Die unterschiedlichsten Ausführungen und Anwendungen des Prinzips sind möglich.

## Patentansprüche

1. Schnelltrennbare Schraubvorrichtung, insbesondere für ein Schraubgewinde oder eine Spannvorrichtung, mit einem Schraubteil, einem erste Gewindeteil (2) und einem zweiten Gewindeteil (3), dessen sich axial erstreckendes Gewinde zum ersten Gewindeteil (2) paßt,
    – wobei das Schraubteil eine axiale Geradführung (1.1) für das erste Gewindeteil (2),
    – und ein Radiallager (1.2) und ein Axiallager (1.4,1.5) für das zweite Gewindeteil (3) aufweist und
    – wobei die Schubrichtung der Geradführung (1.1) und die Drehachse des Radiallagers (1.2) parallel zueinander angeordnet sind,
    wobei die beiden Gewindeteile (3,3) in einem fest Vorgegebenen Abstand (1.3) geführt werden, bei dem der gegenseitige Eingriff der Gewinde der beiden Gewindeteile (2,3) möglich ist, und
    wobei das zweite Gewindeteil (3) ein Außengewinde aufweist, das mit einer sich axial erstreckenden Ausnehmung (3.2) versehen ist, welche mindestens in einer bestimmten Drehstellung den Eingriff der Gewinde vollständig unterbricht.

2. Schraubvorrichtung nach Anspruch 1, **dadurch gekennzeichnet,** daß das erste Gewindeteil (2) ein Außengewinde aufweist.

3. Schraubvorrichtung nach Anspruch 1, **dadurch gekennzeichnet,** daß das erste Gewindeteil (7) einen Sektor (7.1) eines Gewindes aufweist (Fig. 3).

4. Schraubvorrichtung nach Anspruch 1, **dadurch gekennzeichnet,** daß die beiden Gewindeteile (2,3) mehrgängige Gewinde aufweisen.

5. Schraubvorrichtung nach Anspruch 1, **gekennzeichnet** durch die Ausbildung als Spannmittel mit Schnellverstellung der Spannweite (5.1), wobei das Schraubteil als Spannbacke ausgebildet ist (Fig. 1a, b, 2a, b)

6. Schraubvorrichtung nach Anspruch 1, **gekennzeichnet** durch die Ausbildung als Spindeltrieb für eine lineare Verschubeinrichtung, wobei das Schraubteil als Gleitkörper (8) ausgebildet ist (Fig. 4).

## Claims

1. Quickly separable screw device, in particular for a screw thread or a tightening device, with a screw part, a first threaded part (2) and a second threaded part (3), the axially extending thread of which fits with the first threaded part (2),
    – wherein the screw part displays an axial rectilinear guide (1.1) for the first threaded part (2)
    – and a radial bearing (1.2) and an axial bearing (1.4, 1.5) for the second threaded part (3) and
    – wherein the direction of thrust of the rectilinear guide (1.1) and the rotational axis of the radial bearing (1.2) are each arranged parallelly to the other,
    wherein both the threaded parts (2, 3) are guided at a fixedly preset spacing (1, 3), at which the mutual engagement of the threads of both the threaded parts (2, 3) is possible, and
    wherein the second threaded part (3) displays an external thread which is provided with an axially extending recess (3.2), which in at least one rotational setting completely interrupts the engagement of the threads.

2. Screw device according to claim 1, characterised thereby, that the first threaded part (2) displays an external thread.

3. Screw device according to claim 1, characterised thereby, that the first threaded part (7) displays a sector (7.1) of a thread (Figure 3).

4. Screw device according to claim 1, characterised thereby, that both the threaded parts (2, 3) display multistart threads.

5. Screw device according to claim 1, characterised by the construction as tightening means with quick adjustment of the clamping width (5.1), wherein the screw part is constructed as clamping cheek (Figures 1a, 2a and 2b).

6. Screw device according to claim 1, characterised by the construction as spindle drive for a linear displacing device, wherein the screw part is constructed as sliding body (8) (Figure 4).

**Revendications**

1. Dispositif à vis rapidement séparable, en particulier pour un filetage de vis ou un dispositif de serrage, avec un élément à vis, un premier élément fileté (2) et un second élément fileté (3) dont le filetage, s'étendant axialement, est conjugué du premier élément fileté (2),
   – l'élément à vis formant un guidage rectiligne axial pour le premier élément fileté (2),
   – et comporte un palier radial (1.2) et un palier axial (1.4, 1.5) pour le second élément fileté (3) et
   – la direction de déplacement du guidage rectiligne (1.1) et l'axe de rotation du palier radial (1.2) sont disposés parallèlement l'un par rapport à l'autre,
   tandis que les deux éléments filetés (2,3) sont guidés suivant un espacement fixe prédéterminé (1.3), pour lequel l'engrènement réciproque des filetages des deux éléments filetés (2,3) est possible, et
   le second élément fileté (3) comporte un filetage extérieur qui est pourvu d'un évidement (3.2) s'étendant axialement qui, au moins dans une position de rotation déterminée, interrompt complètement l'engrènement des filetages.

2. Dispositif à vis selon la revendication 1, caractérisé en ce que le premier élément fileté (2) comporte un filetage externe.

3. Dispositif à vis selon la revendication 1, caractérisé en ce que le premier élément fileté (7) comporte un secteur (7.1) d'un filetage (figure 3).

4. Dispositif à vis selon la revendication 1, caractérisé en ce que les deux éléments filetés (2,3) comportent des filetages à plusieurs filets.

5. Dispositif à vis selon la revendication 1, caractérisé par la réalisation sous forme de moyen de serrage à réglage rapide de la largeur de serrage (5.1), l'élément à vis étant réalisé sous forme de mâchoire de serrage (figures 1a ; 2 a ,b).

6. Dispositif à vis selon la revendication 1, caractérisé par la réalisation sous forme de mécanisme à broche pour un dispositif de déplacement linéaire, l'élément à vis étant réalisé sous forme de coulisseau (8) (figure 4).

Fig.1a

Fig.1b

Fig. 2a

Fig.2b

Fig. 3

Fig. 4